# EUROPÄISCHE PATENTANMELDUNG

(11) **EP 3 338 940 A1**
(43) Veröffentlichungstag der Anmeldung: **27.06.2018**
(21) Anmeldenummer: 17208169.7
(22) Anmeldetag: 18.12.2017
(51) Int. Cl.: B23Q 3/06, B23Q 39/02, G05B 19/10, G05B 19/4155, B23Q 1/00

(54) **BEARBEITUNGSVORRICHTUNG MIT EINER PROGRAMMTECHNISCHEN STEUERUNG**

(30) Priorität: 20.12.2016 DE 102016124892
(71) Anmelder: Wimmer, Alexander, 83567 Unterreit (DE); Lasetzky, Ralf, 83567 Unterreit (DE)
(72) Erfinder: Wimmer, Alexander, 83567 Unterreit (DE); Lasetzky, Ralf, 83567 Unterreit (DE)
(74) Vertreter: Rothkopf, Ferdinand

(57) **Zusammenfassung**

Bearbeitungsvorrichtung (10) zum Bearbeiten mindestens eines ersten und eines zweiten Werkstücks (30,32) mit einer programmtechnischen Steuerung (106) zum Auslösen eines Bearbeitungsprozesses (110), bei der mindestens eine erste Aufnahme (18) zum Aufnehmen des ersten Werkstücks (30) und eine zweite Aufnahme (20) zum Aufnehmen des zweiten Werkstücks (32) sowie mindestens ein von einem Benutzer der Bearbeitungsvorrichtung (10) manuell zu betätigendes erstes Betätigungselement (88) und ein von dem Benutzer der Bearbeitungsvorrichtung (10) manuell zu betätigendes zweites Betätigungselement (90) zum Auslösen der Steuerung (106) vorgesehen sind, wobei der Bearbeitungsprozess (110) an der ersten Aufnahme (18) ausgelöst ist, indem das erste Betätigungselement (88) von dem Benutzer betätigt worden ist und der Bearbeitungsprozess (110) an der zweiten Aufnahme (20) ausgelöst, indem das zweite Betätigungselement (90) von dem Benutzer betätigt worden ist.

## Beschreibung

### Hintergrund der Erfindung

Die Erfindung betrifft eine Bearbeitungsvorrichtung zum Bearbeiten mindestens eines ersten und eines zweiten Werkstücks mit einer programmtechnischen Steuerung zum Auslösen eines Bearbeitungsprozesses. Ferner betrifft die Erfindung eine Verwendung einer solchen Bearbeitungsvorrichtung.

Bekannte Bearbeitungsvorrichtungen, mit denen beispielsweise Werkstücke aus Stein, Kunststoff, Metall und/oder Holz zu bearbeiten sind, weisen in der Regel eine Aufnahme zum Aufnehmen des zu bearbeitenden Werkstücks auf. Werkstücke können dabei insbesondere Profile von Fenstern oder Türen sein. Ist das Werkstück in der Aufnahme aufgenommen, kann eine programmtechnische Steuerung ausgelöst werden, mit der ein Bearbeitungsprozess eines Bearbeitungswerkzeugs am Werkstück gesteuert ist. Der Bearbeitungsprozess ist typischerweise ein Fräsen, Bohren, Schleifen und/oder Schneiden. Damit kann das Werkstück für seine weitere Verwendung an seine zu erfüllende Funktion und an seinen zur Verfügung stehenden Bauraum angepasst werden.

Sind mit einer solchen Bearbeitungsvorrichtung unterschiedliche Werkstücke zu bearbeiten, ist die Aufnahme vor dem Bearbeiten des jeweils unterschiedlichen Werkstücks auszutauschen. Ein solcher Austausch ist mit Zeitaufwand und Arbeitsaufwand verbunden. Alternativ muss die Aufnahme an das jeweils unterschiedliche Werkstück angepasst werden. Eine Bearbeitungsvorrichtung mit einer derart anpassbaren Aufnahme ist beispielsweise aus DE 20 2016 005 116 U1 bekannt.

Ein Beispiel für eine gattungsgemäße Bearbeitungsvorrichtung kann eine CNC-Maschine (Computerized Numerical Control) sein. Eine solche CNC-Maschine ist eine Werkzeugmaschine, mit der mittels programmtechnischer Steuerung Werkstücke mit hoher Präzision automatisch herstellbar sind. Insbesondere sind vorliegend als CNC-Maschinen Bearbeitungsvorrichtungen zum Bearbeiten von Profilen bzw. Profilbearbeitungsmaschinen von besonderem Interesse.

Unter dem Begriff Profil ist insbesondere ein langgestrecktes Bauteil zu verstehen. Solche langgestreckten Bauteile finden vielfach Verwendung, wie zum Bespiel in der Produktion von witterungsbeständigen Fenstersystemen aus Holz und Metall, insbesondere Aluminium. Derartige Fenstersysteme umfassen einen Fensterrahmen aus Holz, der außenseitig passgenau mit einem Profil bzw. einer Schale aus Metall umgeben ist. Das Profil wird dabei üblicherweise bei einer Montage des Fenstersystems vor Ort manuell relativ zeitaufwändig mit Hilfe von entsprechenden Werkzeugen an den Fensterrahmen angepasst.

### Zugrundeliegende Aufgabe

Der Erfindung liegt die Aufgabe zugrunde, eine alternative Bearbeitungsvorrichtung zu schaffen, die in der Bedienung besonders einfach ist und mit der zeitsparend mindestens zwei Werkstücke zu bearbeiten sind. Insbesondere sollen damit einfach und schnell Profile für Holz-Metall-Fenstersysteme bearbeitbar sein.

### Erfindungsgemäße Lösung

Diese Aufgabe ist erfindungsgemäß mit einer Bearbeitungsvorrichtung zum Bearbeiten mindestens eines ersten und eines zweiten Werkstücks mit einer programmtechnischen Steuerung zum Auslösen eines Bearbeitungsprozesses gelöst, bei der mindestens eine erste Aufnahme zum Aufnehmen des ersten Werkstücks und eine zweite Aufnahme zum Aufnehmen des zweiten Werkstücks sowie mindestens ein von einem Benutzer der Bearbeitungsvorrichtung manuell zu betätigendes erstes Betätigungselement und ein von dem Benutzer der Bearbeitungsvorrichtung manuell zu betätigendes zweites Betätigungselement zum Auslösen der Steuerung vorgesehen sind, wobei der Bearbeitungsprozess an der ersten Aufnahme ausgelöst ist, indem das erste Betätigungselement von dem Benutzer betätigt worden ist und der Bearbeitungsprozess an der zweiten Aufnahme ausgelöst ist, indem das zweite Betätigungselement von dem Benutzer betätigt worden ist.

Es sind also erfindungsgemäß mit der mindestens einen ersten und zweiten Aufnahme mehrere Aufnahmen vorgesehen, in denen jeweils ein Werkstück aufzunehmen ist. Zudem ist jeder Aufnahme ein manuell zu betätigendes Betätigungselement zugeordnet. Jedes Betätigungselement ist mit der Steuerung derart gekoppelt, dass der Bearbeitungsprozess jeweils an der dem Betätigungselement zugeordneten Aufnahme auszulösen ist.

Derart gestaltet, können zugleich und/oder nacheinander mehrere Werkstücke an den mehreren Aufnahmen der erfindungsgemäßen Bearbeitungsvorrichtung aufgenommen sein. An jeder Aufnahme ist das dort aufgenommene Werkstück mittels eines von der Steuerung gesteuerten Bearbeitungsprozesses zu bearbeiten. Dabei ist der einzelne Bearbeitungsprozess einfach und schnell dadurch auszulösen, indem der Benutzer das der einzelnen Aufnahme zugeordnete Betätigungselement betätigt.

Damit können vom Benutzer zunächst mehrere Werkstücke in die Bearbeitungsvorrichtung eingelegt und erst nach einem solchen Einlegen entsprechende Bearbeitungsprozesse ausgelöst werden. Dazu können die einzelnen Betätigungselemente zeitlich nacheinander oder zeitgleich betätigt werden.

Bereits bei einem Betätigen der einzelnen Betätigungselemente zeitlich nacheinander ergibt sich eine merkliche Zeitersparnis im Vergleich zu bekannten Bearbeitungsvorrichtungen mit nur einer Aufnahme. Allein dadurch, dass zunächst mehrere Werkstücke in die Aufnahmen eingelegt werden können, die dann im Anschluss bearbeitet werden, kann Zeit gespart werden. Eine solche Arbeitsabfolge ist erheblich schneller im Vergleich zu einer herkömmlichen Arbeitsabfolge mit nur einer Aufnahme. Herkömmlich muss zunächst das erste Werkstück in die Aufnahme einlegt, anschließend das Betätigungselement betätigt, das erste Werkstück bearbeitet und nachfolgend aus der Aufnahme herausgenommen werden. Danach muss das zweite und zeitlich aufeinanderfolgend jedes weitere Werkstück in die Aufnahme gelegt und entsprechend bearbeitet werden.

Ein zeitgleiches Betätigen der erfindungsgemäßen Betätigungselemente ermöglicht bei einer entsprechenden Ausgestaltung des Bearbeitungswerkzeugs ein zeitgleiches Bearbeiten der mehreren Werkstücke. Mehrere Werkstücke können also besonders schnell bearbeitet werden.

Ferner ist mittels der manuell zu betätigenden Betätigungselemente für den Benutzer eine besonders einfach zu bedienende erfindungsgemäße Bearbeitungsvorrichtung geschaffen. Dabei ist das einzelne Betätigungselement bevorzugt ein Schalter, mit dem insbesondere eine elektrisch leitende Verbindung derart herstellbar ist, dass das Steuergerät zu aktivieren ist. Besonders bevorzugt ist der Schalter dazu ein Taster, der nach einem Betätigen nicht in seinem Schaltzustand bleibt. Mittels des derartigen, nicht im Schaltzustand verbleibenden Schalters hört der Bearbeitungsvorgang sofort auf, sobald der Benutzer den Taster nicht mehr betätigt.

Mittels der erfindungsgemäßen Zuordnung des einzelnen Betätigungselements zu dem in der einzelnen Aufnahme auszulösenden Bearbeitungsprozess ist für den Benutzer zudem eine sehr übersichtliche Bearbeitungsvorrichtung geschaffen.

Insgesamt überzeugt die erfindungsgemäße Lösung also besonders mit ihrer Einfachheit und Schnelligkeit in der Bedienung. Zudem ist die erfindungsgemäße Lösung überraschend. Die Bearbeitungsvorrichtung hat mit den mindestens zwei Aufnahmen und den entsprechend zugeordneten Betätigungselementen einen entsprechend hohen Materialbedarf in der Herstellung. Zudem braucht sie entsprechend viel Platz in der Herstellung, beim Transport und im Betrieb. Diese zunächst als Nachteil erscheinenden Eigenschaften werden von der beschriebenen Einfachheit und Schnelligkeit in der Bedienung bei Weitem kompensiert.

In erfindungsgemäß vorteilhafter Weise sind der Bearbeitungsprozess an der ersten Aufnahme und der Bearbeitungsprozess an der zweiten Aufnahme unterschiedlich. Bevorzugt sind weitere Aufnahmen vorgesehen, an denen mindestens ein Bearbeitungsprozess unterschiedlich ist. Es kann der ersten und zweiten Aufnahme sowie bevorzugt mindestens einer weiteren Aufnahme ein Bearbeitungsprozess zugeordnet sein, mit dem das an der entsprechenden Aufnahme aufgenommene Werkstück dann unterschiedlich zu bearbeiten ist. Damit kann das Werkstück je nach Bearbeitungsprozess entsprechend geformt werden. Je nach gewünschter Form kann der Benutzer das Werkstück einfach an die dem Bearbeitungsprozess zugeordnete Aufnahme geben und das der Aufnahme zugeordnete Betätigungselement bedienen. Es können also sehr schnell und unkompliziert unterschiedlich bearbeitete Werkstücke hergestellt werden.

Besonders vorteilhaft ist der Bearbeitungsprozess an der zweiten Aufnahme in Bezug auf einen zugehörigen Prozessablauf aufbauend auf den Bearbeitungsprozess an der ersten Aufnahme gestaltet. Insbesondere sind die Bearbeitungsprozesse an den weiteren Aufnahmen aufbauend auf den Bearbeitungsprozess an der jeweils vorhergehenden Aufnahme gestaltet. Eine solche stufenweise bzw. kaskadenartige Gestaltung der Bearbeitungsprozesse ermöglicht ein sehr einfaches Bearbeiten eines einzigen Werkstücks nacheinander mit verschiedenen Bearbeitungsprozessen in aufeinanderfolgenden Bearbeitungsstadien. Dazu muss der Benutzer das Werkstück nur nacheinander von der ersten Aufnahme zur zweiten Aufnahme und nachfolgend an jede weitere Aufnahme geben sowie das jeweils zugeordnete Betätigungselement bedienen.

Ferner weist erfindungsgemäß vorteilhaft die erste Aufnahme eine erste Aufnahmefläche mit einer ersten Form sowie die zweite Aufnahme eine zweite Aufnahmefläche mit einer zweiten Form auf. Dabei sind die erste Form sowie die zweite Form unterschiedlich. Insbesondere sind weitere Aufnahmen vorgesehen, deren Aufnahmeflächen in ihren Formen unterschiedlich sind. Damit kann jede Form jeder Aufnahme genau definiert einem Werkstück zugeordnet werden.

Unterschiedliche Werkstücke weisen in der Regel eine unterschiedliche äußere Werkstücksform auf. Dabei haben die einzelnen äußeren Werkstücksformen eine Werkstücksauflagefläche mit unterschiedlicher Werkstücksauflageform, die an der Form der Aufnahmefläche der zugeordneten Aufnahme zum Anliegen kommt. Dazu ist bevorzugt jede Form der Aufnahmefläche zumindest weitgehend komplementär zur Werkstücksauflageform des dort aufzunehmenden Werkstücks gestaltet bzw. zu gestalten.

Derart gestaltet und zugeordnet, müssen im Vergleich zu herkömmlichen Bearbeitungsvorrichtungen erfindungsgemäß vorteilhaft keine Aufnahmen ausgetauscht werden, um Werkstücke mit unterschiedlicher Werkstücksform bearbeiten zu können. Zeit und Arbeit können zusätzlich gespart werden.

Zudem kann der Benutzer mittels der unterschiedlichen Formen der Aufnahmeflächen jeder Aufnahme im Falle unterschiedlicher Werkstücke auf den ersten Blick erkennen, an welche Aufnahme das zugehörige Werkstück gehört. Jedes Werkstück kann damit ohne Bedienerfehler an die zugehörige Aufnahme gegeben werden.

Dank einer solch erfindungsgemäß vorteilhaften definierten Zuordnung jeder Aufnahme an ein zugehöriges Werkstück kann besonders vorteilhaft jedem Werkstück definiert ein zur Aufnahme gehöriger Bearbeitungsprozess zugeordnet werden. Eine Verwechslungsgefahr und damit eine Fehlbearbeitung jedes Werkstücks kann also ausgeschlossen werden.

Alternativ oder zusätzlich weist erfindungsgemäß vorteilhaft die erste Aufnahme eine erste Aufnahmefläche mit einer ersten Oberfläche sowie die zweite Aufnahme eine zweite Aufnahmefläche mit einer zweiten Oberfläche auf. Dabei sind die erste Oberfläche sowie die zweite Oberfläche von unterschiedlicher Beschaffenheit. Vorteilhafterweise sind zudem die Aufnahmeflächen mit ihren Oberflächen an den weiteren Aufnahmen von unterschiedlicher Beschaffenheit. Die derartige unterschiedliche Beschaffenheit ist insbesondere mittels unterschiedlicher Strukturen, Materialien und/oder Härten der Oberfläche der jeweiligen Aufnahmefläche gestaltet. Dank solcher unterschiedlicher Beschaffenheiten der Oberflächen der einzelnen Aufnahmeflächen können Werkstücke mit unterschiedlich beschaffenen Werkstücksoberflächen definiert an einer passenden Aufnahme aufgenommen werden. Zum Beispiel kann ein beschichtetes Werkstück an eine Aufnahme gegeben werden, deren Aufnahmefläche eine Oberfläche mit einer besonders weichen Beschaffenheit aufweist. So kann die Beschichtung des Werkstücks geschont werden.

Darüber hinaus ist in erfindungsgemäß vorteilhafter Weise der ersten Aufnahme ein erstes Haltemittel zum Ausüben einer ersten Haltekraft sowie der zweiten Aufnahme ein zweites Haltemittel zum Ausüben einer zweiten Haltekraft zugeordnet. Dabei sind die erste Haltekraft sowie die zweite Haltekraft unterschiedlich. Bevorzugt sind weitere Aufnahmen vorgesehen, denen jeweils ein weiteres Haltemittel zum Ausüben einer weiteren Haltekraft zugeordnet ist, wobei mindestens eine weitere Haltekraft unterschiedlich zur ersten und zweiten Haltekraft ist.

Derart gestaltet, ist der ersten und zweiten Aufnahme sowie bevorzugt mindestens einer weiteren Aufnahme ein Haltemittel mit einer definierten Haltekraft zugeordnet, wobei die Haltekraft jeweils unterschiedlich ist. Je nach zu bearbeitendem Werkstück kann der Benutzer eine für das Werkstück passende Haltekraft auswählen und an die entsprechende Aufnahme geben. Zum Beispiel kann bei einer beschichteten Oberfläche des Werkstücks eine Aufnahme mit relativ geringer Haltekraft des Haltemittels ausgewählt werden. Eine vom Haltemittel ausgehende Beschädigungsgefahr für die Oberfläche des Werkstücks kann verhindert werden, während zugleich das Werkstück mit passender Haltekraft sicher gehalten ist und entsprechend exakt bearbeitet werden kann.

Vorteilhaft ist das einzelne Haltemittel zum Ausüben einer Haltekraft auf das Werkstück ausgelöst, indem das jeweils der zugehörigen Aufnahme zugeordnete Betätigungselement von dem Benutzer betätigt worden ist. Dazu ist das einzelne Haltemittel entsprechend mit der programmtechnischen Steuerung gekoppelt. Zudem ist die Steuerung bevorzugt dazu angepasst, das Haltemittel derart zu steuern, dass nach einem solchen Betätigen das an der Aufnahme aufgenommene Werkstück ortsfest gehalten ist. Ein solcher Halteprozess und der Bearbeitungsprozess sind also besonders zeitsparend mit nur einem Betätigen eines Betätigungsmittels ausgelöst.

Im Übrigen ist erfindungsgemäß vorteilhaft zusätzlich zu dem mindestens einen ersten und zweiten Betätigungselement ein von dem Benutzer der Bearbeitungsvorrichtung manuell zu betätigendes Startelement vorgesehen. Dabei ist der Bearbeitungsprozess an der ersten Aufnahme ausgelöst, indem das Startelement und das erste Betätigungselement von dem Benutzer betätigt worden sind und der Bearbeitungsprozess an der zweiten Aufnahme ausgelöst, indem das Startelement und das zweite Betätigungselement von dem Benutzer betätigt worden sind. Zudem ist der Bearbeitungsprozess an mindestens einer weiteren Aufnahme insbesondere ausgelöst, indem das Startelement und das der mindestens einen weiteren Aufnahme zugeordnete Betätigungselement von dem Benutzer betätigt worden sind. Derart ausgelöst, kann die Bearbeitungsvorrichtung besonders sicher bedient werden. Der Benutzer muss schließlich mit dem Startelement und dem jeweiligen Betätigungselement zwei Elemente betätigen, um einen Bearbeitungsprozess auszulösen. Insbesondere ist dazu zunächst das Startelement zu betätigen und zeitgleich, also über einen gleichen Zeitraum hinweg das einzelne Betätigungselement. Sind das Startelement und das einzelne Betätigungselement zeitgleich zu betätigen bzw. betätigt zu halten, ist die Bearbeitungsvorrichtung besonders sicher. Dazu ist bevorzugt das Startelement räumlich entfernt vom jeweiligen Betätigungselement angeordnet, sodass der Benutzer beide Hände benötigt, um beide Elemente betätigen zu können. Bevorzugt ist erst das einzelne Betätigungselement und dann das Startelement zu betätigen.

Vorteilhafterweise ist erfindungsgemäß ferner an der ersten Aufnahme ein erster Sensor zum Prüfen einer Belegung der ersten Aufnahme mit dem ersten Werkstück sowie an der zweiten Aufnahme ein zweiter Sensor zum Prüfen einer Belegung der zweiten Aufnahme mit dem zweiten Werkstück vorgesehen. Dabei ist der Bearbeitungsprozess an der ersten Aufnahme nur ausgelöst, indem eine Belegung der ersten Aufnahme angezeigt ist sowie der Bearbeitungsprozess an der zweiten Aufnahme nur ausgelöst, indem eine Belegung der zweiten Aufnahme angezeigt ist. Insbesondere sind weitere Aufnahmen vorgesehen, wobei an mindestens einer weiteren Aufnahme jeweils ein weiterer Sensor vorgesehen ist und der Bearbeitungsprozess an der weiteren Aufnahme nur ausgelöst ist, indem eine Belegung der weiteren Aufnahme angezeigt ist. Dazu ist der jeweilige Sensor bevorzugt mit der programmtechnischen Steuerung gekoppelt. Derart zusätzlich sensorgesteuert, kann bei einem fehlerhaften Betätigen des Betätigungselements einer Aufnahme, die nicht mit einem Werkstück belegt ist, ein Leerlauf des Bearbeitungsprozesses verhindert werden.

Zudem ist erfindungsgemäß vorteilhaft das erste Betätigungselement der ersten Aufnahme räumlich zugeordnet und das zweite Betätigungselement der zweiten Aufnahme räumlich zugeordnet. Bevorzugt ist entsprechend mindestens ein weiteres Betätigungselement mindestens einer weiteren Aufnahme räumlich zugeordnet. Derart zugeordnet, kann der Benutzer besonders schnell und einfach erkennen, welches Betätigungselement er betätigen muss, um den Bearbeitungsprozess in der gewünschten Aufnahme auszulösen bzw. zu starten.

Weiterhin ist in erfindungsgemäß vorteilhafter Weise der Bearbeitungsprozess mittels eines Bearbeitungswerkzeugs durchgeführt, das insbesondere als Fräswerkzeug gestaltet ist. Dabei kann das Bearbeitungswerkzeug zunächst bevorzugt ein beliebiges Werkzeug, wie ein Fräswerkzeug, ein Bohrwerkzeug, ein Schleifwerkzeug und/oder ein Schneidwerkzeug sein. Verschiedenste Bearbeitungsprozesse können damit am Werkstück durchgeführt werden. Besonders bevorzugt ist das Bearbeitungswerkzeug als Fräswerkzeug gestaltet. Ein solches Fräswerkzeug benötigt als Werkzeug vergleichsweise wenig Bauraum. Zudem benötigt das Fräswerkzeug beim Durchführen eines Fräsprozesses bzw. Fräsens besonders wenig Prozessraum. In Kombination mit der mindestens einen ersten und zweiten Aufnahme, in der mindestens ein erstes und ein zweites Werkstück aufzunehmen ist, ist ein solcher prozessraumsparender Fräsprozess von besonderem Vorteil. Es kann zunächst an jeder Aufnahme ein Werkstück aufgenommen sein. Erst dann können die Werkstücke, ohne ein bereits bearbeitetes Werkstück entnehmen zu müssen, nacheinander mittels des Fräswerkzeugs bearbeitet werden. Danach können alle bearbeitenden Werkstücke entnommen werden. Ein solcher Ablauf ist besonders zeitsparend. Zudem kann ein solcher Ablauf dank des prozessraumsparenden Fräsprozesses ohne Gefahr eines unerwünschten Bearbeitens von nebeneinanderliegenden Werkstücken erfolgen.

Ferner ist die Erfindung auf eine Verwendung einer solchen Bearbeitungsvorrichtung zum Bearbeiten mindestens eines ersten und eines zweiten Profils als das mindestens eine erste und eine zweite Werkstück gerichtet. Dabei sind das mindestens eine erste und eine zweite Profil zum Anordnen an Bauelementen, insbesondere an Fenstern, vorgesehen. Es können also mittels der erfindungsgemäßen Bearbeitungsvorrichtung mehrere Profile angepasst an ihre weitere Verwendung und Anordnung in dem Bauelement besonders schnell vorgefertigt werden. Das Bauelement kann dann im Rahmen einer Endmontage wesentlich zeit- und arbeitssparender fertig gestellt werden. Zum Beispiel können die einzelnen Profile Metallprofile, insbesondere Aluminiumprofile sein, die als Außenabdeckung für Holzfenster dienen.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:
- Fig. 1: eine Schrägansicht einer Bearbeitungsvorrichtung gemäß der Erfindung,
- Fig. 2: das Detail II in Fig. 1, und
- Fig. 3: ein vereinfachtes Prozessschema, das mittels der Bearbeitungsvorrichtung gemäß der Erfindung durchführbar ist, nebst zugehöriger schematischer Vorrichtung.

### Detaillierte Beschreibung des Ausführunqsbeispiels

In den Fig. ist eine gattungsgemäße Bearbeitungsvorrichtung 10 dargestellt, die vorliegend eine Profilbearbeitungsmaschine ist. In nicht dargestellten alternativen Ausführungsformen ist eine Vielzahl anderer Bearbeitungsvorrichtungen gestaltbar.

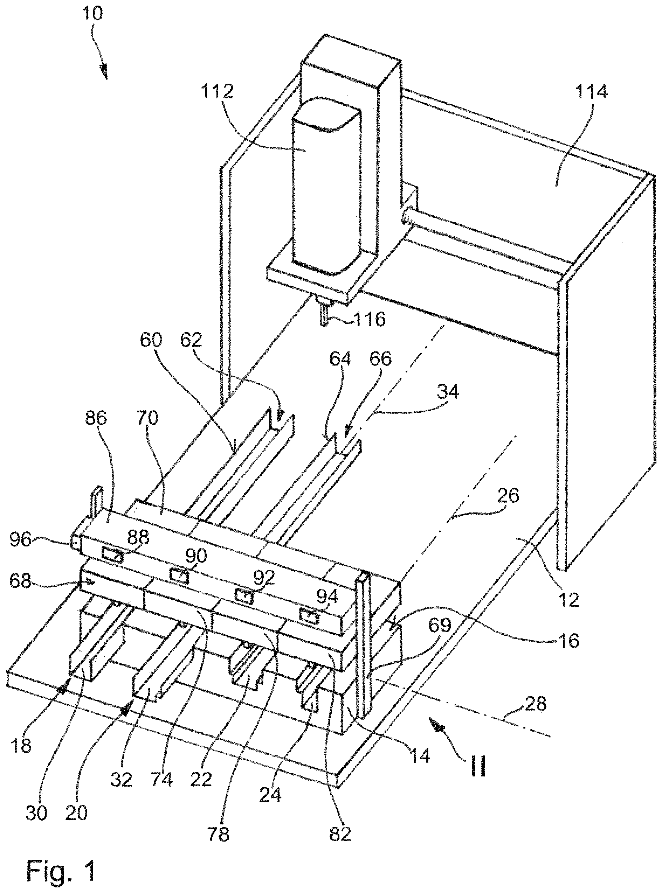

Die Bearbeitungsvorrichtung 10 umfasst eine Grundplatte 12, auf der ein quaderförmiger Aufnahmeträger 14 mit einer, bezogen auf die Fig. 1, nach oben weisenden Trägerfläche 16 angeordnet ist. In der Trägerfläche 16 befinden sich vier unterschiedlich geformte längliche Vertiefungen, die eine erste Aufnahme 18, eine zweite Aufnahme 20, eine dritte Aufnahme 22 und eine vierte Aufnahme 24 darstellen. Jede der Aufnahmeelemente bzw. Aufnahmen 18, 20, 22 und 24 verlaufen mit ihren Längserstreckungen 26 parallel zueinander und im rechten Winkel zu einer Längserstreckung 28 des quaderförmigen Aufnahmeträgers 14.

An der ersten Aufnahme 18 ist ein erstes Werkstück 30 und an der zweiten Aufnahme 20 ist ein zweites Werkstück 32 aufgenommen. Zudem sind die dritte Aufnahme 22 und die vierte Aufnahme 24 dazu vorgesehen, jeweils ein weiteres Werkstück aufzunehmen, das vorliegend nicht dargestellt ist.

Beide dargestellten Werkstücke 30 und 32 sind als langgestreckte Bauteile bzw. Profile gestaltet, dessen Längserstreckungen 34 sich in aufgenommenem Zustand parallel zu den Längserstreckungen 26 der Aufnahmen 18 und 20 erstrecken. Von den Längserstreckungen 26 und 34 ist zur besseren Übersicht jeweils nur eine Längserstreckung angedeutet dargestellt.

Derart parallel zueinander und rechtwinklig zur Längserstreckung 28 des Aufnahmeträgers 14 angeordnet, können mehrere langgestreckte Werkstücke 30, 32 relativ platzsparend längs nebeneinander in den Aufnahmen 18, 20, 22 und 24 aufgenommen sein.

Ferner hat die erste Aufnahme 18 eine erste Aufnahmefläche 36 mit einer ersten Form 38 und einer ersten Oberfläche 40, die zweite Aufnahme 20 eine zweite Aufnahmefläche 42 mit einer zweiten Form 44 und einer zweiten Oberfläche 46, die dritte Aufnahme 22 eine dritte Aufnahmefläche 48 mit einer dritten Form 50 und einer dritten Oberfläche 52 sowie die vierte Aufnahme 24 eine vierte Aufnahmefläche 54 mit einer vierten Form 56 und einer vierten Oberfläche 58.

Im dargestellten Ausführungsbeispiel weisen alle Aufnahmeflächen 36, 42, 48 und 50 der vier Aufnahmen 18, 20, 22 und 24 unterschiedliche Formen 38, 44, 50 und 56 auf. Damit ist jede der Aufnahmen 18, 20, 22 und 24 definiert einem Werkstück 30 oder 32 zuordenbar. So weist das erste Werkstück 30 eine erste Werkstücksauflagefläche 60 mit einer ersten Werkstücksauflageform 62 auf, die komplementär zur ersten Form 38 der ersten Aufnahmefläche 36 an der ersten Aufnahme 18 ist. Ferner hat das zweite Werkstück 32 eine zweite Werkstücksauflagefläche 64 mit einer zweiten Werkstücksauflageform 66, die komplementär zur zweiten Form 44 der zweiten Aufnahmefläche 42 an der zweiten Aufnahme 20 ist. In aufgenommenem Zustand kommt dabei die erste Werkstücksauflagefläche 60 stabil und passgenau an der ersten Aufnahmefläche 36 der ersten Aufnahme 18 sowie die zweite Werkstücksauflagefläche 64 stabil und passgenau an der zweiten Aufnahmefläche 42 der zweiten Aufnahme 20 zum Anliegen. Für einen Benutzer, der die Werkstücke 30 und 32 an die jeweils passenden Aufnahmen 18 und 20 einzubringen hat, ist zudem sofort erkennbar, welches Werkstück 30, 32 zu welcher Aufnahme 18, 20 gehört.

In einer alternativen, nicht dargestellten Ausführungsform sind zumindest zwei der vier Aufnahmen 18, 20, 22, 24 in ihrer Form 38, 44, 50, 56 der Auflagefläche 36, 42, 48, 54 gleich. Damit können zumindest zwei Werkstücke 30, 32 mit jeweils gleicher Werkstücksauflageform 62 und 66 zugleich an die entsprechenden Aufnahmen 18, 20, 22 und 24 angeordnet werden. Ein besonders schnelles Bearbeiten von Werkstücken 30, 32 mit gleicher Werkstücksauflageform 62, 66 ist ermöglicht.

Ferner ist vorliegend die vierte Oberfläche 58 von anderer Beschaffenheit als die erste, zweite und dritte Oberfläche 40, 46 und 52, was nicht weiter dargestellt ist. Im Vergleich zu diesen Oberflächen 40, 46 und 52 ist die vierte Oberfläche 58 von weicherer Beschaffenheit und dazu mit einer Oberflächenschicht aus materialschonendem Filz gestaltet.

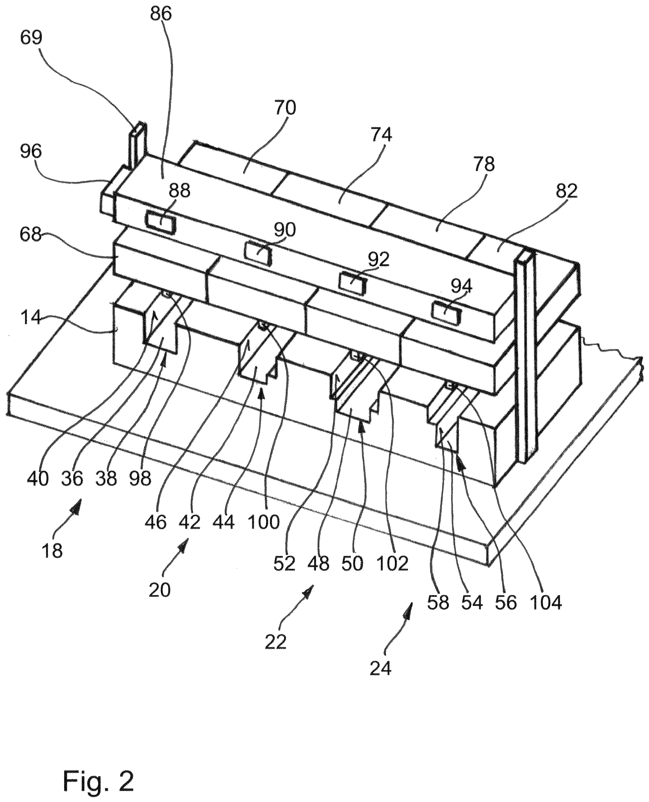

Bezogen auf Fig. 1 und Fig. 2 ist oberhalb des Aufnahmeträgers 14 und damit oberhalb der Aufnahmen 18, 20, 22 und 24 ein entsprechend des Aufnahmeträgers 14 quaderförmig geformter Halteträger 68 zwischen zwei Seitenträgern 69 angeordnet. Der Halteträger 68 umfasst an der ersten Aufnahme 18 ein erstes Haltemittel 70, mit dem eine erste Haltekraft 72 auf das erste Werkstück 30 auszuüben ist. Ferner umfasst der Halteträger 68 an der zweiten Aufnahme 20 ein zweites Haltemittel 74, mit dem eine zweite Haltekraft 76 auf das zweite Werkstück 32 auszuüben ist. Weiterhin gehört zum Halteträger 68 ein drittes Haltemittel 78 zum Ausüben einer dritten Haltekraft 80 an der dritten Aufnahme 22 und ein viertes Haltemittel 82 zum Ausüben einer vierten Haltekraft 84 an der vierten Aufnahme 24.

Jedes der Haltemittel 70, 74, 78 und 82 ist als Spannmittel bzw. Spannwerkzeug derart gestaltet, dass deren als Spannkräfte auszuübenden Haltekräfte 72, 76, 80 und 84 jeweils unterschiedlich sind. Damit können mit jeweils passender Haltekraft 72, 76, 80 und 84 in jede zugehörige Aufnahme 18, 20, 22 und 24 unterschiedliche zu bearbeitende Werkstücke 30, 32 gehalten werden.

In einer alternativen, nicht dargestellten Ausführungsform sind zumindest zwei der vier auszuübenden Haltekräfte 72, 76, 80 und 84 gleich.

Ferner ist bezogen auf Fig. 1 und Fig. 2 oberhalb des Halteträgers 68 und somit auch oberhalb des Aufnahmeträgers 14 ein Querpult als Betätigungselemententräger 86 angeordnet. An dem Betätigungselemententräger 86 befindet sich oberhalb der ersten Aufnahme 18 ein erstes Betätigungselement 88, oberhalb der zweiten Aufnahme 20 ein zweites Betätigungselement 90, oberhalb der dritten Aufnahme 22 ein drittes Betätigungselement 92 und oberhalb der vierten Aufnahme 24 ein viertes Betätigungselement 94. Damit ist jedes der vier Betätigungselemente 88, 90, 92 und 94 der jeweils zugehörigen Aufnahme 18, 20, 22 und 24 räumlich zugeordnet. Zudem ist jedes der vier Betätigungselemente 88, 90, 92 und 94 als Schalter gestaltet, der von einem Benutzer manuell zu betätigen ist.

Zusätzlich ist ein vom Benutzer manuell zu betätigendes Startelement 96 vorgesehen, das räumlich von den vier Betätigungselementen 88, 90, 92 und 94 entfernt seitlich am Querpult 86 angeordnet und als Schalter, insbesondere als Taster, gestaltet ist.

Zudem sind unten am Halteträger 68 ein erster Sensor 98 oberhalb der ersten Aufnahme 18, ein zweiter Sensor 100 oberhalb der zweiten Aufnahme 20, ein dritter Sensor 102 oberhalb der dritten Aufnahme 22 und ein vierter Sensor 104 oberhalb der vierten Aufnahme 24 angeordnet. Jeder der vier Sensoren 98, 100, 102 und 104 sind dazu angepasst, eine Belegung der jeweils zugeordneten Aufnahme 18, 20, 22 und 24 zu prüfen.

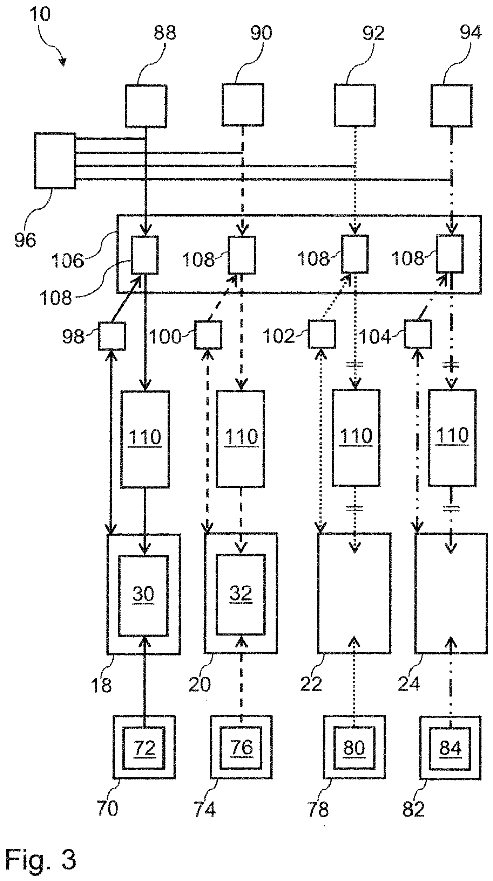

Sowohl die Sensoren 98, 100, 102, 104, das Startelement 96 als auch die Betätigungselemente 88, 90, 92, 94 sind signalübertragend mit einer programmtechnischen Steuerung 106 gekoppelt. In der Steuerung 106 sind mehrere Bearbeitungsprogramme 108 hinterlegt, mit denen jeweils ein Bearbeitungsprozess 110 ausgelöst und gesteuert ist. Dabei ist der einzelne Bearbeitungsprozess 110 von einem Bearbeitungswerkzeug 112 durchgeführt, das signalübertragend mit der Steuerung 106 gekoppelt ist (Fig. 3).

Das Bearbeitungswerkzeug 112 ist in an sich herkömmlicher Weise an einem Werkzeugträger 114 derart angeordnet, dass es zum Durchführen des einzelnen Bearbeitungsprozesses 110 in X-, Y- und Z-Richtung verfahrbar ist. Ferner ist das Bearbeitungswerkzeug 112 vorliegend als Fräswerkzeug mit einem Fräskopf 116 gestaltet.

Wie Fig. 3 zeigt, ist der Bearbeitungsprozess 110 an der ersten Aufnahme 18 dadurch ausgelöst, dass das Startelement 96 sowie das erste Betätigungselement 88 betätigt worden sind und der erste Sensor 98 eine Belegung der ersten Aufnahme 18 mit dem ersten Werkstück 30 anzeigt.

Der Bearbeitungsprozess 110 an der zweiten Aufnahme 20 ist dadurch ausgelöst, dass das Startelement 96 sowie das zweite Betätigungselement 90 betätigt worden sind und der zweite Sensor 100 eine Belegung der zweiten Aufnahme 20 mit dem zweiten Werkstück 32 anzeigt.

Entsprechend ist der Bearbeitungsprozess 110 an der dritten Aufnahme 22 und an der vierten Aufnahme 24 auszulösen. Vorliegend ist dort kein Werkstück aufgenommen. Der den Aufnahmen 22 und 24 zugehörige Sensor 102, 104 zeigt keine Belegung an. Damit wird selbst bei einem Betätigen des Startelements 96 sowie eines der zugehörigen Betätigungselemente 92 und 94 kein Bearbeitungsprozess 110 ausgelöst.

Dabei sind die jeweiligen Werkstücke 30, 32 mit dem zur jeweiligen Aufnahme 18, 20, 22 und 24 zugeordneten Haltemittel 70, 74, 78 und 82 mit der zugehörigen Haltekraft 72, 76, 80 und 84 gehalten bzw. fixiert.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Bearbeitungsvorrichtung
- 12: Grundplatte
- 14: Aufnahmeträger
- 16: Trägerfläche
- 18: erste Aufnahme
- 20: zweite Aufnahme
- 22: dritte Aufnahme
- 24: vierte Aufnahme
- 26: Längserstreckung der Aufnahmen
- 28: Längserstreckung des Aufnahmeträgers
- 30: erstes Werkstück
- 32: zweites Werkstück
- 34: Längsachse des Werkstücks
- 36: erste Aufnahmefläche
- 38: erste Form
- 40: erste Oberfläche
- 42: zweite Aufnahmefläche
- 44: zweite Form
- 46: zweite Oberfläche
- 48: dritte Aufnahmefläche
- 50: dritte Form
- 52: dritte Oberfläche
- 54: vierte Aufnahmefläche
- 56: vierte Form
- 58: vierte Oberfläche
- 60: erste Werkstücksauflagefläche
- 62: erste Werkstücksauflageform
- 64: zweite Werkstücksauflagefläche
- 66: zweite Werkstücksauflageform
- 68: Halteträger
- 69: Seitenträger
- 70: erstes Haltemittel
- 72: erste Haltekraft
- 74: zweites Haltemittel
- 76: zweite Haltekraft
- 78: drittes Haltemittel
- 80: dritte Haltekraft
- 82: viertes Haltemittel
- 84: vierte Haltekraft
- 86: Betätigungselemententräger
- 88: erstes Betätigungselement
- 90: zweites Betätigungselement
- 92: drittes Betätigungselement
- 94: viertes Betätigungselement
- 96: Startelement
- 98: erster Sensor
- 100: zweiter Sensor
- 102: dritter Sensor
- 104: vierter Sensor
- 106: Steuerung
- 108: Bearbeitungsprogramm
- 110: Bearbeitungsprozess
- 112: Bearbeitungswerkzeug
- 114: Werkzeugträger
- 116: Fräskopf

## Patentansprüche

1. Bearbeitungsvorrichtung (10) zum Bearbeiten mindestens eines ersten und eines zweiten Werkstücks (30, 32) mit einer programmtechnischen Steuerung (106) zum Auslösen eines Bearbeitungsprozesses (110),
bei der mindestens eine erste Aufnahme (18) zum Aufnehmen des ersten Werkstücks (30) und eine zweite Aufnahme (20) zum Aufnehmen des zweiten Werkstücks (32) sowie mindestens ein von einem Benutzer der Bearbeitungsvorrichtung (10) manuell zu betätigendes erstes Betätigungselement (88) und ein von dem Benutzer der Bearbeitungsvorrichtung (10) manuell zu betätigendes zweites Betätigungselement (90) zum Auslösen der Steuerung (106) vorgesehen sind, wobei der Bearbeitungsprozess (110) an der ersten Aufnahme (18) ausgelöst ist, indem das erste Betätigungselement (88) von dem Benutzer betätigt worden ist und der Bearbeitungsprozess (110) an der zweiten Aufnahme (20) ausgelöst ist, indem das zweite Betätigungselement (90) von dem Benutzer betätigt worden ist.

2. Bearbeitungsvorrichtung nach Anspruch 1,
wobei der Bearbeitungsprozess (110) an der ersten Aufnahme (18) und der Bearbeitungsprozess (110) an der zweiten Aufnahme (20) unterschiedlich sind.

3. Bearbeitungsvorrichtung nach Anspruch 1 oder 2,
wobei die erste Aufnahme (18) eine erste Aufnahmefläche (36) mit einer ersten Form (38) sowie die zweite Aufnahme (20) eine zweite Aufnahmefläche (42) mit einer zweiten Form (44) aufweist und die erste Form (38) sowie die zweite Form (44) unterschiedlich sind.

4. Bearbeitungsvorrichtung nach einem der Ansprüche 1 bis 3,
wobei die erste Aufnahme (18) eine erste Aufnahmefläche (36) mit einer ersten Oberfläche (40) sowie die zweite Aufnahme (20) eine zweite Aufnahmefläche (42) mit einer zweiten Oberfläche (46) aufweist und die erste Oberfläche (40) sowie die zweite Oberfläche (46) von unterschiedlicher Beschaffenheit sind.

5. Bearbeitungsvorrichtung nach einem der Ansprüche 1 bis 4,
wobei der ersten Aufnahme (18) ein erstes Haltemittel (70) zum Ausüben einer ersten Haltekraft (72) sowie der zweiten Aufnahme (20) ein zweites Haltemittel (74) zum Ausüben einer zweiten Haltekraft (76) zugeordnet ist und die erste Haltekraft (72) sowie die zweite Haltekraft (76) unterschiedlich sind.

6. Bearbeitungsvorrichtung nach einem der Ansprüche 1 bis 5,
wobei zusätzlich zu dem mindestens einen ersten und zweiten Betätigungselement (88, 90, 92, 94) ein von dem Benutzer der Bearbeitungsvorrichtung (10) manuell zu betätigendes Startelement (96) vorgesehen ist,
sowie der Bearbeitungsprozess (110) an der ersten Aufnahme (18) ausgelöst ist, indem das Startelement (96) und das erste Betätigungselement (88) von dem Benutzer betätigt worden sind und der Bearbeitungsprozess (110) an der zweiten Aufnahme (20) ausgelöst ist, indem das Startelement (96) und das zweite Betätigungselement (90) von dem Benutzer betätigt worden sind.

7. Bearbeitungsvorrichtung nach einem der Ansprüche 1 bis 6,
wobei an der ersten Aufnahme (18) ein erster Sensor (98) zum Prüfen einer Belegung der ersten Aufnahme (18) mit dem ersten Werkstück (30) sowie an der zweiten Aufnahme (20) ein zweiter Sensor (100) zum Prüfen einer Belegung der zweiten Aufnahme (20) mit dem zweiten Werkstück (32) vorgesehen ist und der Bearbeitungsprozess (110) an der ersten Aufnahme (18) nur ausgelöst ist, indem eine Belegung der ersten Aufnahme (18) angezeigt ist sowie der Bearbeitungsprozess (110) an der zweiten Aufnahme (20) nur ausgelöst ist, indem eine Belegung der zweiten Aufnahme (20) angezeigt ist.

8. Bearbeitungsvorrichtung nach einem der Ansprüche 1 bis 7,
wobei das erste Betätigungselement (88) der ersten Aufnahme (18) räumlich zugeordnet ist und das zweite Betätigungselement (90) der zweiten Aufnahme (20) räumlich zugeordnet ist.

9. Bearbeitungsvorrichtung nach einem der Ansprüche 1 bis 8,
wobei der Bearbeitungsprozess (110) mittels eines Bearbeitungswerkzeugs (112) durchgeführt ist, das insbesondere als Fräswerkzeug gestaltet ist.

10. Verwendung einer Bearbeitungsvorrichtung (10) nach einem der Ansprüche 1 bis 9 zum Bearbeiten mindestens eines ersten und eines zweiten Profils als das mindestens eine erste und eine zweite Werkstück (30, 32), wobei das mindestens eine erste und eine zweite Profil zum Anordnen an Bauelementen, insbesondere an Fenstern, vorgesehen sind.
